(19) Europäisches Patentamt / European Patent Office / Office européen des brevets

(11) **EP 3 376 670 B1**

(12) **FASCICULE DE BREVET EUROPEEN**

(45) Date de publication et mention
de la délivrance du brevet:
**17.08.2022 Bulletin 2022/33**

(21) Numéro de dépôt: **17188291.3**

(22) Date de dépôt: **29.08.2017**

(51) Classification Internationale des Brevets (IPC):
**H03K 19/21** *(2006.01)* **G06F 7/58** *(2006.01)*
**H04L 9/06** *(2006.01)*

(52) Classification Coopérative des Brevets (CPC):
**H03K 19/21; G09C 1/00; H04L 9/0866;**
H04L 2209/12

(54) **LIGNE À RETARD CONFIGURABLE**

KONFIGURIERBARE VERZÖGERUNGSLEITUNG

LINE WITH CONFIGURABLE DELAY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.03.2017 FR 1752066**

(43) Date de publication de la demande:
**19.09.2018 Bulletin 2018/38**

(73) Titulaire: **STMICROELECTRONICS (ROUSSET)
SAS
13790 Rousset (FR)**

(72) Inventeur: **MARTINEZ, Albert
13320 BOUC BEL AIR (FR)**

(74) Mandataire: **Cabinet Beaumont
4, Place Robert Schuman
B.P. 1529
38025 Grenoble Cedex 1 (FR)**

(56) Documents cités:
**WO-A1-02/052782 US-A1- 2016 004 510
US-B2- 8 169 851**

**Description**

Domaine

La présente description concerne de façon générale les circuits électroniques et, plus particulièrement, des circuits ou fonctions électroniques utilisables comme dans un circuit ou dispositif électronique. Un exemple d'application des circuits et fonctions électroniques de la présente description est la réalisation d'un générateur de nombres aléatoires. Un autre exemple d'application est la réalisation d'une fonction physique non clonable (PUF), par exemple pour générer des identifiants uniques ou des clés cryptographiques uniques. La présente description concerne plus particulièrement la réalisation de cellules ou éléments retardateurs d'une ligne à retard.

Exposé de l'art antérieur

US 8 169 851 B2 divulgue une méthode pour générer un signal d'horloge basé sur un élément retardateur comprenant deux portes logiques de type OU-exclusif placées en série, tel que le signal d'horloge délivré en sortie de l'élément retardateur a une différence de phase par rapport au signal d'horloge d'entrée correspondant aux retards apportés par les deux portes logiques utilisées.

Dans de nombreuses applications, des unités de traitement, par exemple des unités centrales de traitement (CPU) de microcontrôleurs, utilisent des lignes à retards.

Les circuits utilisant des lignes à retard sont nombreux. Il peut s'agir, par exemple de circuit de génération de nombres aléatoires basés sur l'utilisation de lignes à retard rebouclées l'une sur l'autre.

Il existe un besoin d'amélioration des lignes à retard, par exemple pour des générateurs de nombres aléatoires, des circuits fournissant des fonctions physiques non clonables, et plus généralement dans d'autres applications où des problèmes similaires se posent. Résumé

L'invention est définie telle que revendiquée dans la revendication indépendante 1.

Un mode de réalisation pallie tout ou partie des inconvénients des solutions usuelles de lignes à retard.

Un mode de réalisation propose une solution particulièrement adaptée à la génération de nombres aléatoires ou de fonctions physiques pour identifiants uniques, clés cryptographiques, etc.

Un mode de réalisation de la présente description propose un élément retardateur pour ligne à retard.

Un mode de réalisation propose un élément retardateur pour ligne à retard utilisable dans un circuit dont le comportement est modélisable pour réaliser un générateur de nombres d'oscillations à des fins de génération de nombres aléatoires ou d'un nombre non clonable.

Ainsi, un mode de réalisation prévoit un élément retardateur, comportant :

une première porte logique de type OU-Exclusif, dont une première entrée définit une borne d'entrée de l'élément ;
une deuxième porte logique de type OU-Exclusif dont une première entrée est connectée en sortie de la première porte et dont une sortie définit une borne de sortie de l'élément,
des deuxièmes entrées des deux portes étant interconnectées à une deuxième borne d'entrée de l'élément.

Selon un mode de réalisation, l'état du signal appliqué sur la deuxième borne conditionne le fait que l'élément retardateur apporte des retards symétriques sur fronts montants et sur fronts descendants ou apporte des retards différents sur fronts montants et sur fronts descendants.

Un mode de réalisation prévoit une ligne à retard comportant au moins un élément retardateur.

Un mode de réalisation prévoit un ensemble de lignes à retard en série, comportant au moins une ligne à retard.

Selon un premier aspect de l'invention, l'ensemble comporte plusieurs lignes à retard, dont au moins une apportant des retards symétriques sur fronts montants et sur fronts descendants et au moins une apportant des retards différents sur fronts montants et sur fronts descendants.

Selon un mode de réalisation, l'ensemble comporte au moins un multiplexeur intercalé entre deux lignes à retard, une première entrée du multiplexeur étant connectée à la sortie d'une première ligne à retard et une deuxième entrée du multiplexeur étant connectée à l'entrée de cette première ligne à retard.

Un autre aspect de l'invention prévoit également un circuit de génération d'un nombre d'oscillations comportant :

une première branche comprenant au moins un ensemble de lignes à retard telles que ci-dessus ; et
une deuxième branche, rebouclée sur la première et comprenant au moins une ligne à retard apportant des retards symétriques sur fronts montants et sur fronts descendants.

Selon un mode de réalisation, la deuxième branche comporte également au moins un ensemble de lignes à retards telles que ci-dessus.

Un mode de réalisation prévoit également un générateur de nombres comportant :

au moins un circuit de génération d'un nombre d'oscillations ; et
au moins un compteur du nombre d'oscillations générées par ledit circuit.

Un mode de réalisation prévoit également un dispositif électronique comportant au moins un générateur de nombres, ledit circuit étant configuré pour générer un nombre aléatoire d'oscillations.
Selon un mode de réalisation, ledit circuit est configuré pour générer un nombre reproductible.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique et sous forme de blocs, un mode de réalisation d'un circuit électronique du type auquel s'appliquent les modes de réalisation décrits ;
la figure 2 représente un exemple de circuit de génération d'un nombre d'oscillations pour un générateur de nombres aléatoires ou d'un nombre non clonable;
les figures 3A, 3B, 3C, 3D et 3E illustrent, sous forme de chronogrammes, une nouvelle interprétation du fonctionnement d'un générateur d'un nombre d'oscillations ;
la figure 4 représente un mode de réalisation d'un générateur de nombres d'oscillations ;
la figure 5 représente, de façon schématique, un mode de réalisation d'une cellule d'une ligne à retard configurable ;
la figure 6 représente un mode de réalisation d'une ligne à retard paramétrable ;
la figure 7 représente une variante de réalisation de la figure 6 ;
la figure 8 représente une autre variante de réalisation de la figure 6 ; et
la figure 9 représente un mode de réalisation d'un multiplexeur 7 ayant un fonctionnement symétrique.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les utilisations des lignes à retard et les applications des circuits intégrant des lignes à retards, n'ont pas été décrit qu'en relation avec un exemple appliqué à un générateur de nombres aléatoires d'oscillations, mais les modes de réalisation décrits sont plus généralement compatibles avec les utilisations et applications usuelles des lignes à retard. De façon arbitraire, on désigne par état 1, l'état haut d'un signal logique et par état 0 son état bas. Lorsque l'on fait référence aux termes "environ", "approximativement" ou "de l'ordre de", cela signifie à 10 % près, de préférence à 5 % près.

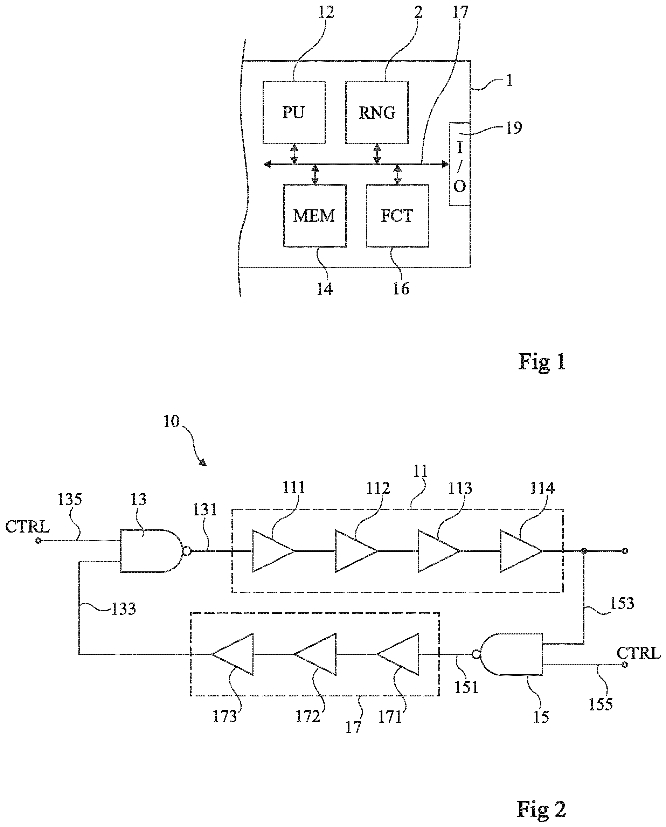

La figure 1 représente, de façon très schématique un circuit électronique 1 du type auquel d'appliquent les modes de réalisation qui vont être décrits.
Le circuit 1 comporte, entre autres :

une entité de calcul 12 ou de traitement (PU), par exemple une machine d'états, un microprocesseur, un circuit logique programmable, etc. ;
une ou plusieurs zones 14 (MEM) de stockage volatile et/ou non volatile pour stocker tout ou partie des données et clés ;
un ou plusieurs circuits 16 mettant en oeuvre diverses fonctions (FCT) liées à l'application à laquelle est destiné le circuit 1, par exemple un crypto processeur, un circuit de commande d'un capteur biométrique, etc. ;
un ou plusieurs bus 17 de données, d'adresses et/ou de commandes entre les différents éléments internes au circuit 1 et une interface d'entrée-sortie 19 (I/O) de communication avec l'extérieur du circuit 1 ; et
un ou plusieurs circuits 2 (RNG) de génération de nombres aléatoire comportant des lignes à retard.

La figure 2 représente un exemple de circuit de génération d'un nombre d'oscillations pour un générateur de nombres aléatoires, basé sur des lignes à retard.
Ce générateur 10 est basé sur deux lignes à retard composées chacune d'éléments retardateurs en série, rebouclées l'une sur l'autre, chaque élément retardateur restituant le signal dans le même état (1 ou 0) que son entrée. Le nombre d'éléments retardateurs de chaque chaîne peut être différent ou identique. Dans l'exemple représenté, une première ligne 11 comporte quatre éléments retardateurs 111, 112, 113 et 114 en série entre une borne de sortie 131 d'une première porte logique 13 de type NON-ET (NAND) et une première borne d'entrée 153 d'une deuxième porte logique 15 de type NON-ET. Une deuxième ligne 17 comporte trois éléments retardateurs 171, 172 et 173 en série entre une borne de sortie 151 de la deuxième porte 15 et une première entrée 133 de la première porte 13. Les deuxièmes entrées respectives 135 et 155 des portes logiques 13 et 15 constituent des bornes d'entrée destinées à recevoir un même signal CTRL de commande (de déclenchement de la génération d'un nombre). Le nombre d'oscillations, qui conditionne le nombre aléatoire, est prélevé, par exemple, en sortie de la première ligne, c'est-à-dire sur la première entrée 153 de la porte 15. En variante, le nombre d'oscillations est prélevé en entrée 133 de la porte 13, en sortie 131 de la porte 13 ou en sortie 151 de la porte 15.

La différence entre les retards apportés par les deux lignes conditionne le rapport cyclique des signaux présents aux bornes 133 et 153.

En théorie, le générateur de la figure 2 oscille indéfiniment avec un rapport cyclique tant que le signal CTRL est à l'état 1. En pratique, en l'absence de bruit mais avec des éléments retardateurs (portes logiques) ayant des temps différents qui finissent par déformer suffisamment le rapport cyclique pour que l'oscillateur s'arrête, le générateur finit par s'arrêter après un nombre d'oscillations fixe. En présence de bruit (gigue de phase - jitter), le générateur finit par s'arrêter mais après un nombre d'oscillations dont la valeur varie.

Ainsi, le fait que le générateur s'arrête n'est pas en soi gênant, bien au contraire, mais ce qui est gênant est de ne pas pouvoir déterminer autour de quelle valeur (quel nombre d'oscillations) il s'arrêtera. En effet, pour que le générateur de nombres aléatoires fonctionne correctement, il faut qu'il ait accumulé suffisamment de bruit, donc un nombre d'oscillations suffisant afin que le résultat du comptage du nombre d'oscillations fournisse, quand le compteur s'arrête, un alea suffisant au niveau de son bit de poids faible ou de quelques (moins de dix) bits de poids faible du compteur d'oscillations.

Les modes de réalisation décrits ci-dessous tirent leur origine dans une nouvelle analyse du comportement d'un générateur de nombres d'oscillations.

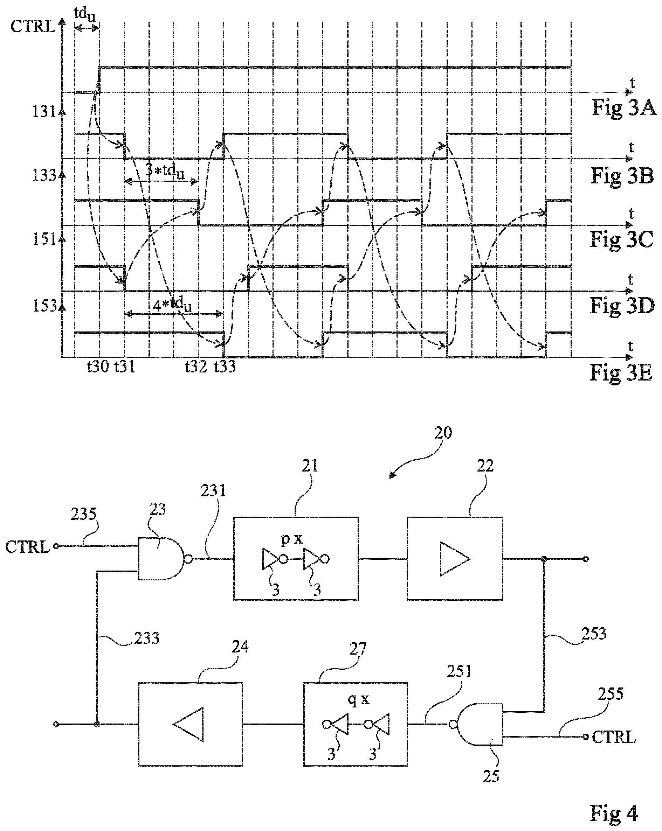

Les figures 3A, 3B, 3C, 3D et 3E illustrent, par des chronogrammes, le fonctionnement théorique du circuit de la figure 2. La figure 3A représente un exemple d'allure du signal CTRL. La figure 3B illustre un exemple correspondant d'allure du signal présent sur la sortie 131 de la porte 13. La figure 3C illustre un exemple correspondant d'allure du signal présent sur la sortie de la première ligne (l'entrée 133 de la porte 13). La figure 3D illustre un exemple correspondant d'allure du signal présent sur la sortie 151 de la porte 15. La figure 3E illustre un exemple correspondant d'allure du signal présent sur la sortie de la première ligne (l'entrée 153 de la porte 15).

On suppose que le retard apporté par chaque porte et par chaque élément retardateur vaut une valeur $td_u$, identique pour tous les éléments et portes.

Quand le signal CTRL est à l'état 0, les sorties 131 et 151 sont tout le temps à l'état 1. Par conséquent les sorties 133 et 153 des lignes 17 et 11 sont stables à l'état 1.

A un instant t30, le signal CTRL est basculé à l'état 1 pour activer la génération. Après un retard $td_u$, les sorties 131 et 151 basculent à l'état 0 à un instant t31. Les lignes 13 et 15 apportent respectivement des retards de $4*td_u$ et de $3*td_u$ aux fronts montants et descendants des signaux présents aux bornes 131 et 151. Par conséquent, le signal 133 bascule à l'état 1 à un instant t32, postérieur de $3*td_u$ par rapport à l'instant t31 et le signal 153 bascule à l'état 1 à un instant t33, postérieur de $4*td_u$ par rapport à l'instant t31.

Les signaux 131 et 151 basculent alors à l'état 1 avec un retard $td_u$ par rapport aux instants t32 et t33 respectivement, et ainsi de suite.

Le nombre d'oscillations prélevé, de préférence en sortie 153 (ou 133), lorsque l'oscillation s'arrête, est aléatoire. On notera que ce nombre d'oscillations peut être compté à n'importe quel point de la boucle.

Outre le bruit de phase, l'un des facteurs qui conduit à l'arrêt du générateur provient notamment d'un déséquilibre entre les temps de montée et les temps de descente des signaux, c'est-à-dire entre le temps que met un élément retardateur ou une porte pour commuter de l'état 1 vers l'état 0 et de l'état 0 vers l'état 1. En effet, le décalage entre les temps de montée et temps de descente d'une branche du générateur (ligne à retard plus porte NON-ET) entraîne qu'il arrive un moment où la durée d'un état devient inférieure au retard apporté par un élément de la ligne à retard.

Un problème est que ce "moment" est fonction du nombre d'éléments retardateurs de la ligne (accumulation des décalages temporels). On souhaiterait cependant pouvoir rendre contrôlable la durée au bout de laquelle un générateur s'arrête, afin, lors de la conception d'un nouveau circuit, de pouvoir garantir que le nombre d'oscillations avant l'arrêt du générateur est suffisant.

En reprenant les notations de l'exemple de la figure 2, on notera par la suite :

$t1_n$, l'instant d'un front (montant ou descendant) de rang n du signal de la sortie 131 ;
$t2_n$, l'instant d'un front (montant ou descendant) de rang n du signal de la sortie 151 ;
$L1_n$, la durée du niveau bas de rang n du signal de la sortie 131 (cette durée est liée au retard apporté par la deuxième ligne 17 plus la première porte 13) ;

$H2_n$, la durée du niveau haut de rang n du signal de la sortie 151 (cette durée est liée au retard apporté par la première ligne 11 plus la deuxième porte 15) ;

$tr_1$ et $tf_1$, les temps de montée et de descente respectifs du signal de la sortie 151 par rapport à l'instant de commutation de la borne 131 ; et

$tr_2$ et $tf_2$, les temps de montée et de descente respectifs du signal de la sortie 131 par rapport à l'instant de commutation de la borne 151.

Le comportement du générateur peut s'écrire à partir de suites arithmétiques. En particulier, on peut écrire :

$$L1_n = t1_{2n+1} - t1_{2n} \;$$

et

$$H2_n = t2_{2n+2} - t2_{2n+1}.$$

Par ailleurs :

$$t1_{2n} = t2_{2n-1} + tf_2 \;$$

$$t1_{2n+1} = t2_{2n} + tr_2 \;$$

$$t2_{2n-1} = t1_{2n-2} + tr_1 \;$$

et

$$t2_{2n} = t1_{2n-1} + tf_1 \;$$

On peut en déduire :

$$L1_n = H2_{n-1} - \Delta fr_2, \; \text{avec} \; \Delta fr_2 = tf_2 - tr_2 \;$$

et

$$H2_{n-1} = L1_{n-1} + \Delta fr_1, \; \text{avec} \; \Delta fr_1 = tf_1 - tr_1.$$

A partir de ces relations, on peut exprimer les récurrences des différentes durées simplement en fonction des différences entre les temps de montée et de descente.

Par exemple, pour la durée L1n, on peut écrire :

$$L1_{n+1} = L1_n + \Delta fr1 - \Delta fr_2.$$

Puis, en exprimant la suite à partir du premier terme $L1_0$ (n=0) :

$$L1_n = L1_0 - n*r, \; \text{avec} \; r = \Delta fr_2 - \Delta fr_1.$$

On obtient donc une suite arithmétique dont la raison r est déterminable, lors de la conception du circuit, en fonction du nombre de cellules de base (éléments retardateurs) choisis et de leur écart entre temps de montée et temps de descente.

Une relation similaire peut s'écrire pour les durées H2, avec :

$$H2_n = H2_0 - n*r.$$

De façon similaire, en notant :

$H1_n$, la durée du niveau haut de rang n du signal de la sortie 131 (cette durée est liée au retard apporté par la première ligne 11 plus la deuxième porte 15) ;
$L2_n$, la durée du niveau bas de rang n du signal de la sortie 151 (cette durée est liée au retard apporté par la première ligne 11 plus la deuxième porte 15) ; et

On peut obtenir les relations suivantes :

$$H1_n = H1_0 + n*r$$

; et

$$L2_n = L2_0 + n*r.$$

Si la différence entre les temps de montée et les temps de descente (la raison r) est négative, les durées L1 et H2 augmentent tandis que les durées L2 et H1 diminuent. A l'inverse, si la raison r est positive, les durée L1 et H2 diminuent tandis que les durée L1 et H2 augmentent.

La figure 4 représente un mode de réalisation d'un générateur 20 de nombres d'oscillations tirant profit de cette analyse.

En particulier, on souhaite pouvoir contrôler (afin de respecter des caractéristiques souhaitées pour le générateur aléatoire) le comportement temporel du générateur d'oscillations, c'est-à-dire la durée à partir de laquelle il s'arrête. Cette durée est non seulement fonction du retard apporté par les lignes à retard mais également des temps de montée et de descente de ces lignes.

Connaissant les comportements des cellules de base (éléments retardateurs) de la technologie dans laquelle on souhaite réaliser le générateur aléatoire, on peut déduire le nombre d'oscillations après lequel le générateur va s'arrêter. Avec une raison r positive, on peut fixer une limite quand la durée $L1_n$ devient nulle, c'est-à-dire pour $n = L1_0/r$. En pratique, les oscillations s'arrêtent quand la durée de l'impulsion devient inférieure au retard d'un élément retardateur.

Selon ce mode de réalisation, chaque branche est composée d'une ligne à retard 21, respectivement 27, dite symétrique c'est-à-dire ayant des temps de montée et de descente identiques ou très proches (écart entre le temps de montée et de descente inférieur au dixième de la raison r) en série avec un élément 22, respectivement 24, dit asymétrique, dont les temps de montée et de descente sont différents l'un de l'autre. Une borne 231 d'entrée la première branche est reliée en sortie d'une première porte logique 23 de type NON-ET (NAND) dont une première entrée 235 reçoit un signal de déclenchement CTRL et dont une seconde entrée 233 reçoit la sortie de la deuxième branche. Une borne de sortie 253 de la première branche est reliée à une première entrée d'une deuxième porte 25 de type NON-ET dont une première entrée 255 reçoit le signal CTRL et dont la sortie 251 est reliée en entrée de la deuxième branche. La sortie du générateur d'un nombre aléatoire d'oscillations est par exemple la borne 253 ou la borne 233. Comme précédemment, cette sortie, donc le comptage des oscillations, peut correspondre en variante à la sortie 231 ou 251 de la porte 23, respectivement 25, ou plus généralement à n'importe quel point de la boucle. En pratique, la sortie est reliée en sortie d'un compteur asynchrone du nombre d'oscillations qui compte le nombre d'oscillations entre l'activation du générateur par le signal CTRL et l'arrêt des oscillations. Ce compteur (non représenté en figure 4) est, par exemple, constituée d'une bascule ou de plusieurs bascules en cascade, l'entrée d'horloge de la ou d'une première bascule recevant le signal de sortie du générateur. La ou les sorties des bascules fournissent un nombre sur un ou plusieurs bits (selon le nombre de bascules) dont généralement seuls les bits ou le bit de poids faible sont conservés pour constituer le nombre aléatoire.

Le cas échéant, plusieurs générateurs sont utilisés en parallèle pour augmenter le débit en bits aléatoires générés.

Pour réaliser les lignes à retard symétriques 21 et 27, on peut utiliser des inverseurs appariés, c'est-à-dire un nombre pair d'inverseurs dans chaque ligne. Par exemple, la ligne 21 comporte p paires d'inverseurs 3 en série tandis que la ligne 27 comporte q paires d'inverseurs 3 en série. Les nombres p et q peuvent être identiques ou différents l'un de l'autre.

En utilisant des paires d'inverseurs, non seulement le signal n'est pas inversé en sortie de chaque ligne, mais surtout chaque ligne présente un temps de montée et de descente identique ou très proche (écart inférieur au dixième de la raison divisée par p ou par q). En effet, en utilisant des cellules logiques identiques de la technologie concernée, même si un inverseur 3 réalisé dans cette technologie a un temps de montée différent de son temps de descente, une paire d'inverseurs 3 identiques forme un élément dont les temps de monté et de descente sont identiques. En notant tr et tf, les temps de montée et de descente d'un inverseur 3, le temps de montée et de descente d'une paire devient tr+tf (tr+tf ou tf+tr selon le sens du front d'entrée). Ainsi, même si les temps tf et tr sont différents l'un de l'autre, leur somme reste constante pour toute les paires d'inverseurs. Les lignes 21 et 27 apportent donc un retard déterminable et constant quelle que soit la transition (montante ou descendante).

On peut utiliser n'importe quelle réalisation d'inverseur (par exemple des inverseurs CMOS formés de deux transistors en série, des portes NON-OU ou NON-ET à entrées interconnectées, etc.) pourvus que ces inverseurs respectent la condition d'associer, lorsqu'ils sont appariés en série, successivement temps de montée et temps de descente, ou inversement, afin que ces temps soient sommés quel que soit le front présent en entrée.

Pour réaliser les éléments asymétriques 22 et 24, on utilise un élément de type amplificateur logique (buffer) non inverseur, à l'exclusion de deux inverseurs identiques en série.

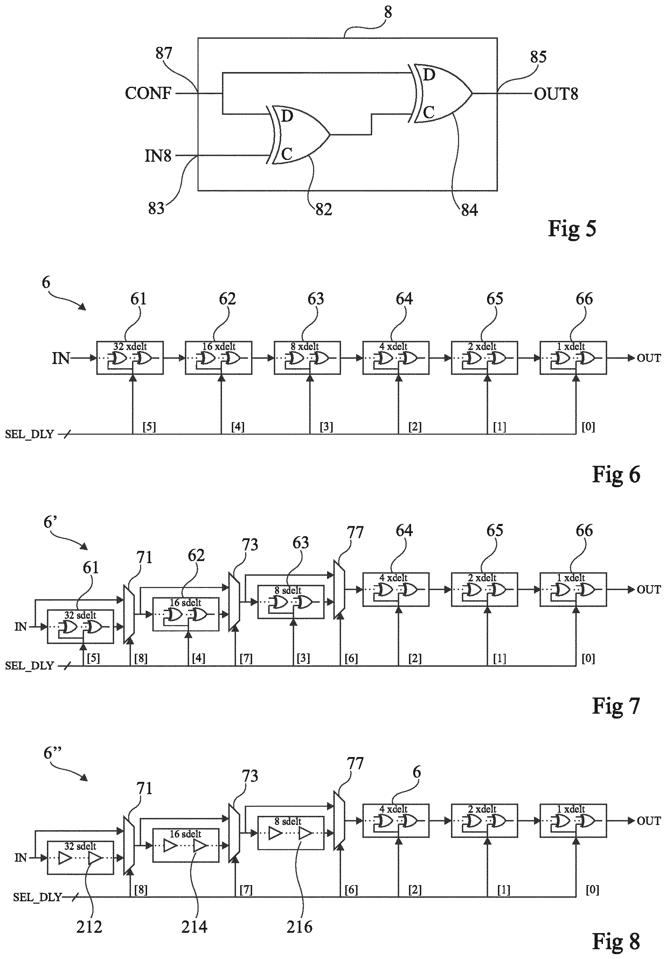

Selon le mode de réalisation qui est décrit par la suite en relation avec la figure 6, on prévoit une fonction logique que l'on peut ramener à une fonction inverseuse ne dépendant que d'une seule entrée et dont les temps de montée et de descente sont différents. Chaque élément 22 et 24 est choisi pour présenter un temps de montée différent de son temps de descente. De plus, les éléments 22 et 24 sont choisis pour présenter des écarts différents entre temps de montée et temps de descente. Ainsi, on introduit les écarts qui vont conditionner l'arrêt du générateur. En pratique, comme il ressort des formules établies plus haut, les portes 23 et 25 apportent également un décalage entre les temps de montée et de descente de chaque branche. Ce décalage doit être ajouté à celui introduit par l'élément 24, respectivement 22, pour obtenir les écarts, respectivement $\Delta fr_1$ et $\Delta fr_2$, donc les raisons des suites arithmétiques.

Un avantage de la réalisation proposée est que ces nombres p et q de paires d'inverseurs des lignes 21 et 27 n'influent pas sur la raison des suites arithmétiques définissant les oscillations. En effet, ils ne conditionnent que les premiers termes de chaque suite, c'est-à-dire les durées des premières impulsions qui suivent la commutation du signal CTRL pour activer la génération.

Selon un mode de réalisation simplifié, on prévoit un seul élément 22 ou 24, l'autre branche n'ayant que la ligne à retard symétrique.

Les lignes 21 et 27 peuvent être indifféremment placées en amont ou en aval des éléments 22 et 24 avec lesquels elles sont respectivement associées. En variante, les éléments 22 et 24 sont même intercalés à l'intérieur des lignes 21 et 27, entre des inverseurs ou des paires d'inverseurs qui les constituent.

L'interprétation du nombre généré s'effectue en comptant les impulsions sur une des sorties 233 et 253 et en prenant, en tant que bit aléatoire, par exemple, le bit de poids faible à la fin de la période de comptage. La période de comptage est fixée par un signal d'horloge.

La figure 5 représente un mode de réalisation d'un élément (cellule) d'une ligne à retard, configurable pour réaliser un élément retardateur à retard symétrique ou asymétrique.

La cellule 8 comporte deux portes de type OU-Exclusif. Une première porte 82 a une première entrée C connectée à une borne d'entrées 83 de la cellule 8, recevant un signal IN8. La sortie de la première porte 82 est connectée à une première entrée C d'une deuxième porte OU-Exclusif 84 dont la sortie est connectée à une borne 85 de sortie de la cellule 8, fournissant un signal OUT8. Les deuxièmes entrées D des deux portes 82 et 84 sont interconnectées à une borne 87 d'application d'un signal CONF de configuration de la cellule entre symétrique et asymétrique.

De préférence, l'interconnexion des bascules 82 et 84 respecte l'ordre de leurs entrées respectives. Ainsi, la même entrée (par exemple D) reçoit le signal CONF et la sortie de la bascule 82 est reliée à l'entrée (par exemple C) de la bascule 84 qui correspond au même type d'entrée de la bascule 82 qui reçoit le signal IN8. On s'assure ainsi que le temps de propagation, dans la bascule 82, du signal IN8 soit le même que le temps de propagation, dans la bascule 84, du signal fournit par la sortie de la bascule 82.

Selon l'état du signal CONF, la cellule 8 constitue un élément retardateur symétrique ou asymétrique.

Si le signal CONF est à l'état 1, alors le temps de montée tr8 (temps pour que le signal de sortie OUT8 passe de 0 à 1 sous l'effet d'une commutation de 0 à 1 du signal IN8) est égal à la somme du temps de descente tf82 de la première porte 82 et du temps de montée tr84 de la deuxième porte 84. Le temps de descente tf8 (temps pour que le signal de sortie OUT8 passe de 1 à 0 sous l'effet d'une commutation de 1 à 0 du signal IN8) est égal à tr82+tf84, où tr82 représente le temps de montée de la porte 82 et tf84 le temps de descente de la porte 84. En considérant que les portes 82 et 84 sont identiques, tr82=tr84 et tf82=tf84. Par conséquent la différence entre les temps de monté tr8 et de descente tf8 est nulle. On a bien un élément retardateur symétrique.

Si le signal CONF est à l'état 0, alors le temps de montée tr8 est égal à la somme des temps de montée tr82 et tr84 des portes 82 et 84. Le temps de descente tf8 est égal à la somme des temps de descente tf82 et tf84 des portes 82 et 84. Par conséquent, comme les temps de montée et de descente de chaque porte sont différents l'un de l'autre, la différence entre les temps de monté tr8 et de descente tf8 n'est pas nulle. On a bien un élément retardateur asymétrique.

Un avantage d'une telle réalisation est que cela simplifie considérablement la fabrication. En effet, toutes les lignes à retard peuvent être constituées des mêmes cellules 8 et le choix entre une ligne à retard symétrique ou asymétrique s'effectue par le signal de configuration.

La figure 6 représente un mode de réalisation d'une branche de lignes à retard 6, paramétrables à la fois en retard symétrique et en retard asymétrique.

La réalisation de la figure 6 peut constituer, à titre d'exemple particulier dans les réalisations précédentes, un mode de réalisation d'une branche constituée de la ou des lignes à retard symétrique, par exemple 21, et du ou des éléments retardateurs à retards asymétriques, par exemple 22.

Selon ce mode de réalisation, on associe plusieurs lignes à retard 6i (six lignes à retard 61, 62, 63, 64, 65 et 66 dans l'exemple représenté). Chaque ligne 6i est constituée d'une ou plusieurs cellules 8 en série, les entrées 87 des cellules 8 d'une même ligne 6i étant interconnectées. En d'autre termes, une ligne 6i est constituée d'un nombre pair de portes OU-Exclusif en cascade ayant toutes une entrée commune : la borne 87. Dans l'exemple représenté, les lignes 61, 62, 63, 64, 65 et 66 comportent respectivement 32, 16, 8, 4, 2 et 1 éléments retardateurs configurables (xdelt). La ligne 61 reçoit le signal d'entrée IN de la ligne à retard 6 et la ligne 66 fournit le signal OUT de sortie.

Chaque ligne 6i est configurée individuellement par un bit différent, respectivement [5], [4], [3], [2], [1], [0] d'un mot SEL_DLY. Les états respectifs des bits du mot SEL_DLY définissent si la ligne 6i concernée est à retard symétrique ou asymétrique.

Dans une application à la réalisation d'un générateur de nombres d'oscillations du type illustré par la figure 4, la borne IN d'entrée de la ligne 6 est reliée en sortie (231 ou 251, figures 4 et 5) de la branche concernée.

La figure 7 représente une variante de réalisation de la figure 6 dans laquelle la ligne 6' comporte une ou plusieurs lignes 6i, voire toutes les lignes 6i (dans l'exemple représenté, les lignes 61, 62 et 63), court-circuitables à l'aide d'un multiplexeur 7i (71, 73, 77). En d'autres termes, les entrées des lignes 61, 62 et 63 sont respectivement reliées directement à une première entrée des multiplexeurs 71, 73 et 77 dont l'autre entrée est reliée à la sortie de la ligne à retard correspondante. Les sorties des multiplexeurs 71, 73, 77 sont respectivement reliées aux entrées des lignes 62, 63 et 64.

Chaque multiplexeur 71, 73, 77 est commandable individuellement, par exemple, par un bit différent. Dans l'exemple de la figure 7, le mot SEL_DLY comporte trois bits supplémentaires [6], [7] et [8] de commande des multiplexeurs respectivement 77, 73, 71.

La figure 8 représente une autre variante de réalisation dans laquelle la ligne 6" comporte des lignes 6i configurables et des lignes à retard symétrique. Dans l'exemple représenté, on suppose trois lignes 212, 214, 216, de préférence constituées d'une ou plusieurs paires d'inverseurs, c'est-à-dire d'éléments retardateurs ayant chacun des temps de montée et de descente identiques comme décrit plus haut. Les lignes 212, 214, 216 remplacent les lignes 61, 62 et 63 de la figure 7 et comportent respectivement 32, 16 et 8 paires d'inverseurs, soit 32, 16 et 8 éléments retardateurs symétriques unitaires (sdelt). Comme les lignes 212, 214 et 216 ne sont pas configurables, le signal SEL_DLY ne comporte que six bits, notés arbitrairement [8], [7], [6], [2], [1], [0] pour respecter la notation de la figure 7.

Ainsi, la ligne à retard 6 est paramétrable à la fois en retard et en différence entre temps de montée et temps de descente.

Le nombre de lignes à retard symétriques et asymétriques dépend de la capacité de réglage souhaitée. Les éléments dissymétriques ont non seulement des temps de montée et de descente différents mais aussi un délai intrinsèque qui contribue au délai total de la ligne à retard.

Les réalisations des figures 6 à 8 peuvent servir, par exemple, à intégrer une même architecture de générateur et à rendre cette structure paramétrable, que ce soit à la conception ou dans l'application.

Les réalisations des figures 6 à 8 peuvent être combinées à celle de la figure 4.

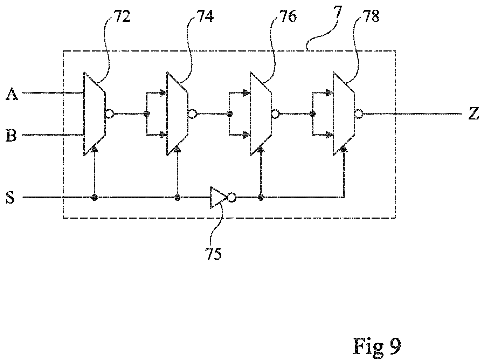

La figure 9 représente un mode de réalisation d'un multiplexeur 7 ayant un fonctionnement symétrique, c'est-à-dire un temps de montée et un temps de descente identiques.

Le multiplexeur 7 de la figure 9 est un multiplexeur deux vers un, c'est-à-dire qu'il sélectionne l'une de ses deux entrées A ou B et fournit le signal correspondant en sortie Z. La sélection entre l'entrée A ou B s'effectue par un signal de commande S.

Le multiplexeur 7 comporte quatre éléments de multiplexage ou de sélection deux vers un. On peut considérer que le multiplexeur 7 est constitué de 4 multiplexeurs unitaires 72, 74, 76 et 78 associés en chaîne. Les multiplexeurs sont des multiplexeurs inverseurs. Un premier multiplexeur 72 a ses bornes d'entrée respectivement reliées aux entrées A et B. Un deuxième multiplexeur 74 a ses deux entrées reliées ensemble à la sortie du premier multiplexeur 72. Un troisième multiplexeur 76 a ses deux entrées reliées ensemble à la sortie du deuxième multiplexeur 74. Un quatrième multiplexeur 78 a ses deux entrées reliées ensemble à la sortie du troisième multiplexeur 76 et sa sortie fournit la sortie Z. Le signal S commande directement les multiplexeurs 72 et 74 et, après traversée d'un inverseur 75, les multiplexeurs 76 et 78.

Le fait que les multiplexeurs 74, 76 et 78 aient leurs entrées interconnectées engendre qu'ils n'effectuent en fait aucune sélection. Toutefois, en supposant que tous les multiplexeurs 72, 74, 76 et 78 sont identiques, ils ont tous des temps de montée et de descente identiques. De plus, ils ont tous un comportement similaire lors d'un front sur leur première entrée et tous un comportement similaire lors d'un front sur leur deuxième entrée.

En notant tr les temps de montée, tf les temps de descente et en affectant ces notations d'un premier indice A, respectivement B, selon que le front est sur l'entrée A (la première entrée du multiplexeur unitaire concerné) ou B (la deuxième entrée du multiplexeur unitaire concerné) et d'un deuxième indice 72, 74, 76 ou 78 selon le multiplexeur unitaire concerné, on peut écrire :

$$tr_{A72} = tr_{A74} = tr_{A76} = tr_{A78} = tr_A \ ;$$

$$tf_{A72} = tf_{A74} = tf_{A76} = tf_{A78} = tf_A \ ;$$

$$tr_{B72} = tr_{B74} = tr_{B76} = tr_{B78} = tr_B \ ;$$

et

$$tf_{B72} = tf_{B74} = tf_{B76} = tf_{B78} = tf_B.$$

En raison de l'inversion de la commande des deux multiplexeurs 76 et 78 par rapport à celle des multiplexeurs 72 et 74, les temps de montée et de descente du multiplexeur 7, de l'entrée A ou B jusqu'à la sortie Z, peuvent s'écrire, selon qu'un front montant r ou descendant f est présent sur l'entrée A ou sur l'entrée B :

$$tr_{AZ} = tf_{A72} + tr_{A74} + tf_{B76} + tr_{B78} \ ;$$

$$tf_{AZ} = tr_{A72} + tf_{A74} + tr_{B76} + tf_{B78} \ ;$$

$$tr_{BZ} = tf_{B72} + tr_{B74} + tf_{A76} + tr_{A78} \ ;$$

et

$$tf_{BZ} = tr_{B72} + tf_{B74} + tr_{A76} + tf_{A78}.$$

Comme les temps de montée et de descente unitaire sont identiques pour une entrée donnée, on en déduit :

$$tr_{AZ} = tf_{AZ} = tr_{BZ} = tf_{BZ} = tr_A + tf_A + tr_B + tf_B.$$

Par conséquent, les temps de montée et de descente du multiplexeur 7 sont identiques quelle que soit l'entrée considérée. Le multiplexeur est donc symétrique avec la définition donnée plus haut.

En variante, on peut prévoir d'inverser la commande à d'autres endroits pourvu que deux multiplexeurs sélectionnent leurs premières entrées respectives quand les deux autres sélectionnent leurs deuxièmes entrées respectives. Dans ce cas, on veillera cependant à ce que le retard de propagation apporté par les inverseurs ne soit pas supérieur au temps de propagation minimum d'un multiplexeur unitaire, faute de quoi la sortie est faussée. Un avantage du mode de réalisation de la figure 10 est qu'il garantit que la sélection des multiplexeurs 76 et 78 soit active avant que le signal (le front) ait fini de traverser les multiplexeurs 72 et 74.

Bien que cela n'apporte pas d'avantage en termes de symétrie, on peut prévoir d'utiliser 8, 12, 16 et plus généralement tout multiple de quatre de multiplexeurs unitaires pourvu que la moitié soit commandée en inverse par rapport à l'autre moitié. Cela permet, par exemple, d'augmenter le temps de propagation sans nuire à la symétrie du fonctionnement.

Un avantage du mode de réalisation de la figure 9 est qu'il est indépendant de la structure interne des multiplexeurs unitaires. En effet, pourvu que l'on utilise des multiplexeurs unitaires identiques, le fonctionnement décrit est respecté.

Un multiplexeur tel que représenté en figure 9 a de multiple applications. En particulier, il est fréquent qu'il soit avantageux d'avoir un fonctionnement symétrique.

A titre d'exemple particulier d'application, le multiplexeur de la figure 9 peut être utilisé pour réaliser chacun des multiplexeurs 71, 73 et 77 des réalisations des figures 7 et 8. Un avantage est alors que la raison des suites d'impulsions du générateur de nombres reste uniquement liée aux éléments 8, ce qui facilite le dimensionnement.

Un avantage des modes de réalisation qui ont été décrits est qu'ils permettent de concevoir ou de configurer un générateur de nombres aléatoires de façon fiable et déterminable. Ainsi, on peut respecter les critères fixés par un cahier des charges et valider que le générateur respecte ce cahier des charges.

Un autre avantage est que la solution décrite est compatible avec l'utilisation de cellules standards d'une technologie donnée.

Un autre avantage est que l'ensemble du générateur est réalisable avec des éléments logiques.

Pour un générateur de nombres aléatoires, le nombre est prélevé soit après un intervalle de temps fixe, déclenché par l'activation du générateur (signal CTRL) et choisi pour être supérieur au temps maximum d'arrêt du générateur), soit en détectant l'arrêt du ou des compteurs.

Pour réaliser un générateur de nombres non clonable de type identifiant d'un circuit intégré, les lignes à retard et la raison des suites arithmétiques sont dimensionnées afin de fixer le nombre d'oscillations. Le prélèvement du nombre est effectué après l'arrêt du générateur comme pour un générateur de nombres aléatoires et on ne conserve de préférence qu'une partie des bits (les plus significatifs).

Divers modes de réalisation ont été décrits. Diverses variantes et modifications apparaîtront à l'homme de l'art. En particulier, le choix des retards apportés par les lignes à retard symétriques et des décalages apportés par les éléments retardateurs asymétriques dépend de l'application et du cahier des charges du générateur. Enfin, la mise en oeuvre pratique des modes de réalisation qui ont été décrits est à la portée de l'homme du métier à partir des indications fonctionnelles données ci-dessus.

**Revendications**

**1.** Circuit (20) de génération d'un nombre d'oscillations comportant :

une première branche comprenant au moins un ensemble de plusieurs lignes à retard en série, dont au moins une apportant des retards symétriques sur fronts montants et sur fronts descendants et au moins une apportant des retards différents sur fronts montants et sur fronts descendants ; et
une deuxième branche, rebouclée sur la première et comprenant au moins une ligne à retard apportant des retards symétriques sur fronts montants et sur fronts descendants,
les lignes à retard de la première branche comportant chacune au moins un élément retardateur (8), comportant :

une première porte logique de type OU-Exclusif (82), dont une première entrée (C) définit une borne d'entrée (83) de l'élément ;
une deuxième porte logique de type OU-Exclusif (84) dont une première entrée (C) est connectée en sortie de la première porte et dont une sortie définit une borne de sortie (85) de l' élément,
des deuxièmes entrées (D) des deux portes étant interconnectées à une deuxième borne d'entrée (87) de l'élément, l'état du signal appliqué sur la deuxième borne conditionnant le fait que l'élément retardateur apporte des retards symétriques sur fronts montants et sur fronts descendants ou apporte des retards différents sur fronts montants et sur fronts descendants.

**2.** Circuit selon la revendication 1, dans lequel le ou les ensembles comportent au moins un multiplexeur (71, 73, 77) intercalé entre deux lignes à retard, une première entrée du multiplexeur étant connectée à la sortie d'une première ligne à retard et une deuxième entrée du multiplexeur étant connectée à l'entrée de cette première ligne à retard.

**3.** Circuit selon la revendication 1 ou 2, dans lequel la deuxième branche comporte au moins un ensemble de lignes à retard en série de même constitution que l'ensemble de lignes à retard de la première branche.

**4.** Générateur de nombres comportant :

au moins un circuit (20) selon l'une quelconque des revendications 1 à 3 ; et
au moins un compteur du nombre d'oscillations générées par ledit circuit.

**5.** Dispositif électronique comportant au moins un générateur selon la revendication 4, ledit circuit (20) étant configuré pour générer un nombre aléatoire d'oscillations.

**6.** Dispositif électronique comportant au moins un générateur selon la revendication 4, ledit circuit (20) étant configuré pour générer un nombre reproductible.

## Patentansprüche

**1.** Schaltung (20) zum Erzeugen einer Anzahl von Oszillationen, aufweisend:

einen ersten Zweig aufweisend wenigstens eine Anordnung von einer Vielzahl von in Reihe geschalteten Verzögerungsleitungen, von denen wenigstens eine symmetrische Verzögerungen bei steigenden und fallenden Flanken einbringt und wenigstens eine unterschiedliche Verzögerungen bei steigenden und fallenden Flanken einbringt; und
einen zweiten Zweig, der auf den ersten Zweig zurück geschleift ist und wenigstens eine Verzögerungsleitung aufweist, die symmetrische Verzögerungen bei steigenden und fallenden Flanken einbringt,
wobei die Verzögerungsleitungen des ersten Zweigs jeweils ein Verzögerungselement (8) aufweisen, das Folgendes aufweist:

ein erstes XOR-Gatter (82) mit einem ersten Eingang (C), der einen Eingangsanschluss (83) des Elements definiert;
ein zweites XOR-Gatter (84) mit einem ersten Eingang (C), der mit dem Ausgang des ersten Gatters verbunden ist, und mit einem Ausgang, der einen Ausgangsanschluss (85) des Elements definiert,
zweite Eingänge (D) der beiden Gatter, die mit einem zweiten Eingangsanschluss (87) des Elements verbunden sind, wobei der Zustand des an den zweiten Anschluss angelegten Signals bedingt, ob das Verzögerungselement symmetrische Verzögerungen bei steigenden und fallenden Flanken oder unterschiedliche Verzögerungen bei steigenden und fallenden Flanken einbringt.

**2.** Schaltung nach Anspruch 1, **dadurch gekennzeichnet, dass** die Anordnung oder die Anordnungen wenigstens einen Multiplexer (71, 73, 77) aufweisen, der zwischen zwei Verzögerungsleitungen geschaltet ist, wobei ein erster Eingang des Multiplexers mit dem Ausgang einer ersten Verzögerungsleitung verbunden ist und ein zweiter Eingang des Multiplexers mit dem Eingang dieser ersten Verzögerungsleitung verbunden ist.

**3.** Schaltung nach Anspruch 1 oder 2, wobei der zweite Zweig wenigstens eine Anordnung von Verzögerungsleitungen in Reihe aufweist, die die gleiche Struktur wie die Anordnung von Verzögerungsleitungen des ersten Zweigs aufweist.

**4.** Zahlengenerator aufweisend:
wenigstens eine Schaltung (20) nach einem der Ansprüche 1 bis 3; und wenigstens einen Zähler für die Anzahl der von dieser Schaltung erzeugten Schwingungen.

**5.** Elektronische Vorrichtung aufweisend wenigstens einen Generator nach Anspruch 4, wobei die Schaltung (20) konfiguriert ist zum Erzeugen einer zufällige Anzahl von Schwingungen.

**6.** Elektronische Vorrichtung aufweisend wenigstens einen Generator nach Anspruch 4, wobei die Schaltung (20) konfiguriert ist zum Erzeugen einer reproduzierbaren Zahl.

## Claims

**1.** Circuit (20) for generating a number of oscillations comprising:

a first branch comprising at least an assembly of a plurality of delay lines in series, one at least of which introduces symmetrical delays on rising edges and on falling edges and one at least of which introduces different delays on rising edges and on falling edges; and
a second branch, looped back on the first one and comprising at least one delay line introducing symmetrical delays on rising edges and on falling edges,
the delay lines of the first branch each comprising a delaying element (8), comprising:

a first XOR logic gate (82) having a first input (C) defining an input terminal (83) of the element;
a second XOR logic gate (84) having a first input (C) connected to the output of the first gate and having an output defining an output terminal (85) of the element,
second inputs (D) of the two gates being interconnected to a second input terminal (87) of the element, the state of the signal applied to the second terminal conditioning the fact that the delaying element introduces symmetrical delays on rising edges and on falling edges or introduces different delays on rising edges and on falling edges.

2. Circuit according to claim 1, wherein the assembly or the assemblies comprise at least one multiplexer (71, 73, 77) interposed between two delay lines, a first input of the multiplexer being connected to the output of a first delay line and a second input of the multiplexer being connected to the input of this first delay line.

3. Circuit according to claim 1 or 2, wherein the second branch comprises at least one assembly of delay lines in series having the same structure as the assembly of delay lines of the first branch.

4. Number generator comprising:

   at least one circuit (20) according to any of claims 1 to 3; and
   at least one counter of the number of oscillations generated by said circuit.

5. Electronic device comprising at least one generator according to claim 4, said circuit (20) being configured to generate a random number of oscillations.

6. Electronic device comprising at least one generator according to claim 4, said circuit (20) being configured to generate a reproducible number.

**Fig 1**

**Fig 2**

Fig 3A

Fig 3B

Fig 3C

Fig 3D

Fig 3E

Fig 4

**Fig 5**

**Fig 6**

**Fig 7**

**Fig 8**

Fig 9

**EP 3 376 670 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8169851 B2